# EUROPÄISCHE PATENTSCHRIFT

(11) **EP 0 417 409 B1**
(45) Veröffentlichungstag und Bekanntmachung des Hinweises auf die Patenterteilung: **20.09.1995**
(21) Anmeldenummer: 90112007.1
(22) Anmeldetag: 25.06.1990
(51) Int. Cl.: G05B 19/04, B23K 7/00

(54) **Einrichtung zur optisch-elektronischen Steuerung einer Brennschneidmaschine**
System for the opto-electrical command of a flame cutting machine
Système pour la commande opto-électronique d'une machine de tranchage par flamme

(30) Priorität: 13.09.1989 DE 3930610
(43) Veröffentlichungstag der Anmeldung: 20.03.1991
(73) Patentinhaber: ESAB-HANCOCK GmbH, D-61184 Karben (DE)
(72) Erfinder: Helkenberg, Rolf, D-6453 Seligenstadt (DE)
(74) Vertreter: Schubert, Siegmar, Dipl.-Ing.

(56) Entgegenhaltungen:
- EP-A- 0 408 755
- DE-B- 2 203 194
- US-A- 4 439 249
- WELDING JOURNAL, Bd. 66, Nr. 12, Dezember 1987, Miami,US;Seiten 369S - 377S;E.W. KIM et al.: "Visible light emissions during gas tungsten arc welding and its application to weld image improvements."
- WELDING JOURNAL, Bd. 64, Nr. 7, Juli 1985, Miami,US;Seiten 19 - 25; W.D. JOLLY et al.:"Control factors for automation of oxyfuel gas cutting."
- WELDING INTERNATIONAL, Bd. 2, Nr. 12, 1988, Abington,GB;Seiten 1086 - 1090; S.NAKATA et al.: "Visual sensing system for in-process control of arc welding process."

## Beschreibung

Die Erfindung betrifft eine Einrichtung zur optisch-elektronischen Steuerung einer Brennschneidmaschine nach dem Oberbegriff des Anspruchs 1.

Es ist bereits bekannt, einen Gasschneidevorgang über ein auf die Schneidflamme gerichtetes fotoelektrisches Element kontinuierlich zu steuern, indem eine Änderung der Helligkeit eines Teils des Gasschneidens mit oxydierender Reaktion mit Hilfe des fotoelektrischen Elements erfaßt wird (DE-AS 22 03 194). Damit soll der Gasschneidevorgang durch automatische Steuerung der Schneidgeschwindigkeit sowie durch Anhalten der Schneidvorrichtung, z.B. bei einem Fehlzünden, gesteuert werden. Im einzelnen ist das fotoelektrische Element am oberen Ende eines Brenners angebracht und auf den hell leuchtenden Teil der Flamme über eine zentrale Bohrung für den Schneidsauerstoff in dem Brenner und über einen in der Schneiddüse des Brenners vorgesehenen Kanal ausgerichtet. Die Schneidgeschwindigkeit wird durch Erfassen der Änderung der Ausgangsspannung des fotoelektrischen Elements innerhalb eines vorbestimmten Bereiches kontinuierlich gesteuert. Mit diesem fotoelektrischen Element wird jedoch nur ein Kriterium, nämlich die Änderung der Helligkeit des Teils des Gasschneidens mit oxydierender Reaktion erfaßt, um den Gasschneidevorgang anzuhalten, wenn eine Fehlzündung auftritt, und um die Schneidgeschwindigkeit zu steuern.

Um eine Leistungssteigerung des Brennschneidens herbeizuführen und Material zu sparen, ist bereits vorgeschlagen worden, die Temperatur der Flamme, die Zündtemperatur des zu schneidenden Metalls und die Temperatur der Stirnschnittfläche beim Schneiden getrennt zu erfassen und auszuwerten. Dabei wird ein Signal entsprechend der Flammentemperatur zur Steuerung der Gaszufuhr ausgewertet, ein Signal der Zündtemperatur des Metalls zur Steuerung des Schneidsauerstoffes und für die Bewegung des Strahls ausgewertet und das Signal der Temperatur der Stirnschnittfläche für die Befehlsausgabe zur Unterbrechung des Schneidprozesses ausgewertet.

Hierzu besteht bei der vorgeschlagenen optisch-elektronischen Steuerung ein in dem Brenner mit dem Kanal des Schneidsauerstoffs untergebrachter Fotogeber aus drei einzelnen Fotoelementen, die unabhängig voneinander mit der Auswerteeinrichtung verbunden sind. Die Fotoelemente weisen unterschiedliche spektrale Empfindlichkeiten auf. So ist ein erstes Fotoelement mit einem Steuerungssystem für die Zufuhr des Gases und für Koordinatenantriebe verbunden und seine optische Charakteristik (Empfindlichkeit) soll der Temperatur der Flamme entsprechen. Ein zweites Fotoelement ist mit einem Steuerungssystem für die Zufuhr des Schneidsauerstoffes und für die Koordinatenantriebe verbunden; seine optische Charakteristik soll der Zündtemperatur des Metalls entsprechend. Ein drittes Fotoelement ist ebenfalls mit dem Steuerungssystem für den Schneidsauerstoff und für die Koordinatenantriebe verbunden, seine optische Charakteristik soll jedoch der Temperatur der Stirnschneidfläche angepaßt sein. Die Anpassung der optischen Charakteristiken der drei Fotoelemente hatte nur den Zweck, deren Empfindlichkeit im Hinblick auf das von dem jeweiligen Fotoelement erfaßte optische Phänomen zu maximieren. Ausgewertet wurden die Ausgangssignale der Fotoelemente lediglich getrennt und hinsichtlich ihrer Amplitude, d.h. der Helligkeit der Flamme oder des Werkstücks in dem spektralen Empfindlichkeitsbereich des jeweiligen Fotoelements. Die Auswertung der Amplituden der Ausgangssignale ergibt jedoch bei dem Einbau der Fotoelemente in den Schneidbrenner keine eindeutige Aussage über die Existenz der beispielsweise überwachten Flamme, des Erreichens der Zündtemperatur oder des Schneidens des Brenners, weil die Amplituden der Ausgangssignale der Fotoelemente starken Störeinflüssen unterliegen. So treten störende Änderungen des Amplitudenpegels bei einem Düsenwechsel auf, sowie Änderungen der Höhe des Brenners über dem Werkstücks und bei Variationen der Schneidgeschwindigkeit.

Bei einer bekannten Einrichtung nach dem Oberbegriff des Anspruchs 1 zum Schneiden von Blechen werden die Brenngasund die Sauerstoffzufuhr sowie andere Parameter selbsttätig abhängig von Temperaturen eingestellt, die mit zwei Sensoren an verschiedenen Stellen eines Schweißspalts erfaßt werden US-A-4 439 249). Es werden insbesondere die Oberflächentemperatur an der Schulter des Schweißspalts und die Temperatur in dem Schweißspalt abgefühlt, wobei zusätzlich zu der Helligkeit die Frequenz des in dem Schweißspalt emittierten Lichts gemessen wird. Die dazu verwendeten Sensoren sind außen an dem Brenner angeordnet, es kann sich aber auch einer der beiden Sensoren in einem Kanal des Brenners befinden. Es können generell jedwede konventionelle Temperatur-Sensorarten, bevorzugt aber Infrarotsensoren verwendet werden. Die Ausgänge der Sensoren stehen mit einem Mikroprozessor in Verbindung. Damit werden die an den beiden Meßstellen erfaßten Temperaturen mit Logik-Verknüpfungen, insbesondere UND- Verknüpfungen, ausgewertet. Besondere Maßnahmen zur Unterdrückung von Störungen sind nicht erkennbar.

Zum Stand der Technik der Erfassung der Lichtemissionen während des Gas-Wolfram-Lichtbogenschweißens, um das Schweißbild zu verbessern, gehört der Einsatz eines Monochromators, insbesondere Doppelmonochromators, mit dem das gesamte Spektrum des während des Schweißvorgangs ausgesendeten Lichts erfaßt wird (WELDING JOURNAL, vol. 66, no. 12, Dezember 1987, MIAMI US, Seiten 369a - 377s; E.W. KIM et al.: "Visible light emissions during gas tungsten arc welding and its application to weld image improvements."). Ein solcher Monochromator ist ein kompliziertes und aufwendiges physikalisches Gerät, dessen Einsatz im Arbeitsbetrieb einer Brennschneidmaschine nicht ernsthaft in Betracht kommt. Demgemäß ist die Verwendung eines Monochromators zur direkten Steuerung eines Schneidbrenners nicht offenbart.

Es wurde die Verwendung mehrerer Sensoren unterschiedlicher spektraler Empfindlichkeit zur optoelektronischen Steuerung des Sauerstoffschneidens vorgeschlagen, wobei jedoch kein Quotient der Ausgangsgrößen der Sensoren gebildet wird (EP-A-0 408 755). Vielmehr steht jeder der Sensoren über einen Verstärker und einen eigenen zugehörigen Signalgenerator mit einem elektrischen Steuersystem in Verbindung, welches in Abhängigkeit von der mit jedem Sensor erfaßten Helligkeit der erfaßten Meßstellen Operationen der Schneidmaschine auslöst. Die Erfassung nur der jeweiligen Helligkeit ist jedoch nicht störsicher.

Der Erfindung liegt daher die Aufgabe zugrunde, eine Einrichtung der eingangs genannten Gattung so weiterzuentwickeln, daß die Ausgangssignale der fotoelektrischen Sensoren eindeutige Kriterien zur Bildung von Steuer- und Überwachungssignalen selbsttätig erzeugen, ohne verfälschenden Störeinflüssen ausgesetzt zu sein. Die kompakte Anordnung der fotoelektrischen Sensoren in dem Schneidbrenner sollte dabei nach Möglichkeit erhalten bleiben.

Diese Aufgabe wird durch die Ausbildung der Einrichtung zur optisch-elektronischen Steuerung mit den in dem kennzeichnenden Teil des Anspruchs 1 angegebenen Mitteln gelöst.

Wesentlich ist hierbei, daß nicht mehr jedem fotoelektrisch zu überwachenden Phänomen des Brennschneidens eine von mehreren fotoelektrischen Sensoren unterschiedlicher spektraler Empfindlichkeit, deren Ausgangsgrößen getrennt ausgewertet werden, zugeordnet ist, sondern daß alle interessierenden Vorgänge mit vorzugsweise einem Paar fotoelektrischer Sensoren unterschiedlicher spektraler Empfindlichkeit erfaßt werden, deren Ausgangssignale in elektronischen Mitteln zur Quotientenbildung in Relation zueinander gesetzt werden, so daß die Ausgangssignale nicht mehr ein Maß für die Helligkeit des von den fotoelektrischen Sensoren erfaßten Bereichs sind, sondern dessen(Farb-)Temperatur entsprechen, vorzugsweise proportional sind. Demzufolge haben Einflüsse, welche die Amplituden der von den fotoelektrischen Sensoren abgegebenen Ausgangssignale gleichmäßig beeinflussen, keine störende Auswirkung auf die Ausgangssignale und deren Auswertung.

Um eindeutige Steuer- und Überwachungssignale für die verschiedenen Phasen oder Zustände zu erhalten, sind in der Auswerteeinrichtung, die mit dem Quotient der Ausgangsgrößen der Sensoren beaufschlagt wird, nach Anspruch 3 Diskriminatoren für verschiedene Auswertebereiche dieses Quotienten vorgesehen, von denen jeweils ein Auswertebereich in Abhängigkeit von dem Auftreten eines externen Steuerkommandos aktivierbar ist. Es ist also jeweils ein Auswertebereich einer Phase des Brennschneidens zugeordnet, damit aus der bei dieser Phase durch die Sensoren und die Quotientenbildung ermittelte Wellenlänge des empfangenen Lichts eine eindeutige, auf diese Phase bezogene Aussage gewonnen werden kann, die zur weiteren Steuerung des Brennschneidens genutzt wird. Im einzelnen sind diese Phasen bzw. Auswertebereiche das Brennen der (Vorwärm-)Flamme, der Verlauf des Vorwärmens des Werkstücks sowie der eingentliche Schneidvorgang unter Schneidsauerstoffzufuhr. Je nach dem beabsichtigten Anwendungsbereich der Einrichtung können diese und gegebenenfalls weitere Phasen bestimmt werden und durch Einsatz eines Diskriminators in der Auswerteeinrichtung realisiert werden.

Als Geber der externen Steuerkommandos zum Aktivieren der Diskriminatoren bzw. Auswertebereiche in der Auswerteeinrichtung sind nach Anspruch 4 solche Geber vorgesehen, die Steuerkommandos zum Zünden der Flamme, zum Vorwärmen des Werkstücks und zum Schneiden unter Schneidsauerstoffzufuhr abgeben. Solche Geber gehören in der Regel zur Grundausstattung der Steuerung einer Brennschneidmaschine, so daß sie den Aufwand im Zusammenhang mit der vorliegenden Erfindung nicht erhöhen; vielmehr haben diese Geber hier nur eine neue, zusätzliche Funktion.

Zur Unterbringung der fotoelektrischen Sensoren in dem Kopf eines Brenners besonders geeignet, da sehr kompakt, ist nach Anspruch 5 eine Opto-Doppeldiode auf einem gemeinsamen Substrat. Die Dioden der Opto-Doppeldiode weisen dabei unterschiedliche Empfindlichkeitsmaxima in Abhängigkeit von der Lichtwellenlänge auf. Eine solche monolitische Doppeldiode ist unter der Bezeichnung PD 153 (Firma Sharp, Japan) bekannt. Sie besteht im wesentlichen aus zwei Dioden unterschiedlicher spektraler Empfindlichkeit mit einer gemeinsamen Kathode. Die beiden Anodenanschlüsse und der gemeinsame Kathodenanschluß sind aus der Doppeldiode herausgeführt. Das Lichtempfindlichkeitsmaximum der einen Diode liegt etwas unterhalb 600 nm, während das Lichtempfindlichkeitsmaximum der anderen Diode bei 900 nm ist. - Die Kombination zweier Sensoren mit der voranstehend angegebenen unterschiedlichen spektralen Empfindlichkeit ergibt einen verhältnismäßig großen auswertbaren Bereich der empfangenen Lichtwellenlänge.

Bei einer Variante des Paars Sensoren unterschiedlicher spektraler Empfindlichkeit können gleichartigen Opto-Dioden, d.h. solche mit gleicher spektraler Empfindlichkeit verwendet werden, wenn gemäß Anspruch 6 eine der beiden Opto-Dioden in einem Reflexionsstrahlengang und eine andere der beiden Opto-Dioden in Transmissionsstrahlengangs eines teildurchlässigen Spiegels angeordnet sind, der eine spektral unterschiedliche Reflexion und Transmission aufweist. Insbesondere kann der Spiegel für die vorliegende Anwendung vorteilhaft so beschaffen sein, daß er jeweils den gleichen Lichtstromteil durchläßt und reflextiert bei einer Lichtwellenlänge von 700 nm ("50 %-Kante").

In einer wiederum anderen Ausführungsform der beiden Sensoren unterschiedlicher spektraler Empfindlichkeit können diese aus je einer getrennten Opto-Diode unterschiedlicher spektraler Charakteristik bzw. Empfindlichkeit nach Anspruch 7 bestehen.

Als solche Opto-Dioden unterschiedlicher spektraler Charakteristik können insbesondere nach Anspruch 8 je eine optische Germaniumdiode und eine Siliziumdiode vorgesehen sein.

Wesentlich ist bei allen Ausführungsformen, daß durch die Quotientenbildung der Ausgangsgrößen bzw. Ausgangssignale der beiden Sensoren unterschiedlicher spektraler Empfindlichkeit ein resultierendes Signal von der absoluten Lichtmenge, mit der beide Sensoren beaufschlagt werden, unabhängig ist und nur eine Abhängigkeit von der empfangenen Lichtwellenlänge aufweist.

Die elektronischen Mittel zur Quotientenbildung können vereinfachend durch wenigstens einen Substrahierer nach Anspruch 9 realisiert sein, in welchem der Quotient der Ausgangsgrößen der Sensoren unterschiedlicher spektraler Empfindlichkeit näherungsweise gebildet wird.

In einer Weiterbildung der letztgenannten Einrichtung kann nach Anspruch 10 jedem der beiden Eingänge des Subtrahierers je ein Logik-Verstärker vorgeschaltet sein, der mit je einer der Ausgangsgrößen der Sensoren unterschiedlicher spektraler Empfindlichkeit beaufschlagt wird, um eine genauere Quotientenbildung in Verbindung mit dem Subtrahierer zu erreichen.

Um aus den Ausgangssignalen bzw. Ausgangsgrößen der Sensoren ein definiertes Steuer- oder Überwachungssignal zu bilden, nachdem die Quotienten- oder Differenzbildung erfolgt ist, wird nach Anspruch 11 in der Auswerteeinrichtung wenigstens ein Comparator als Diskriminator vorgesehen. Der Diskriminator gibt je ein definiertes Ausgangssignal in Abhängigkeit davon ab, ob die Sensoren mit Licht über oder unter einer Grenzwellenlänge beaufschlagt werden. Die Grenzwellenlänge wird durch das Referenzsignal, insbesondere eine Referenzspannung bestimmt, mit dem ein Eingang des Comparators beaufschlagt wird.

Um je einen Auswertebereich festzulegen, innerhalb dessen ein überwachter Vorgang bzw. eine Phase des Schneidbrennens im Sollbereich ist, wird nach Anspruch 12 in der auswerteeinrichtung als Diskriminator je ein Fenstercomparator eingesetzt, der zwei Comparatoren umfaßt, von denen je einer auf eine Obergrenze sowie auf eine Untergrenze des aktivierbaren Auswertebereichs bzw. Sollbereichs voreinstellbar ist. Die Ausgänge der Comparatoren sind dabei über ein Logik-Element miteinander verknüpft, um ein Steuer- oder Überwachungssignal bzw. Bereitschaftssignal abzugeben, wenn die Ausgangsgrößen der Comparatoren innerhalb des Sollbereichs liegen. Die Grenzen des Sollbereichs können mit den Referenzsignalen bzw. Referenzspannungen an den Comparatoren eingestellt werden, wobei eine individuelle Einstellung der oberen Grenzen und der unteren Grenze möglich ist.

Zur Überwachung mehrerer Schneidbrenner einer Brennschneidmaschine sind die im einzelnen in dem Anspruch 13 angegebenen Merkmale vorgesehen. Wesentlich ist hierbei, daß nicht jedem Paar fotoelektrischer Sensoren unterschiedlicher spektraler Empfindlichkeit eine vollständige Auswerteeinrichtung mit Diskriminatoren bzw. Fenstercomparatoren für die einzelnen Auswertebereiche zugeordnet ist, sondern daß nur ein Satz Diskriminatoren bzw. Fenstercomparatoren im Zeitmultiplexverfahren mehrfach, nämlich für sämtliche Paare Sensoren genutzt werden. Zu der entsprechenden Einrichtung gehören nicht nur Multiplexer am Eingang und am Ausgang der Auswerteeinrichtung, sondern ein adressierbares Register, welches die in der Auswerteeinrichtung gebildeten Steuer- und Überwachungssignale den einzelnen Schneidbrennern in einer vorprogrammierten Folge zuordnet.

Die Erfindung wird im folgenden anhand einer Zeichnung mit 13 Figuren erläutert. Es zeigen:
- Fig. 1: einen Schneidbrenner, in dem die fotoelektrischen Sensoren untergebracht sind, in einer Seitenansicht, teilweise geschnitten,
- Fig. 2: schematisch die beiden Sensoren unterschiedlicher spektraler Empfindlichkeit als monolitische Opto-Doppeldiode,
- Fig. 3: einen typischen Verlauf der spektralen Empfindlichkeit der beiden Dioden der Opto-Doppeldiode nach Fig. 2 in Abhängigkeit von der Wellenlänge des Lichts,
- Fig. 4: das Verhältnis der Ausgangsgrößen, nämlich der Ausgangsströme der beiden Dioden nach Fig. 2 ebenfalls in Abhängigkeit von der Wellenlänge des Lichts,
- Fig. 5: eine schematische Darstellung der Anordnung der beiden Sensoren mit einem teildurchlässigen Spiegel,
- Fig. 6: die Transmissions-Reflexionskennlinie des teildurchlässigen Spiegels in Abhängigkeit von der Lichtwellenlänge,
- Fig. 7: die Ausgangsgrößen, nämlich Ausgangsströme der beiden Sensoren gemäß Fig. 5,
- Fig. 8: eine Auswerteeinrichtung in Blockdarstellung,
- Fig. 9: die Auswertebereiche in Abhängigkeit von bestimmten Phasen des Schneidvorgangs einschließlich vorbereitungsphasen,
- Fig. 10 - 13: Blockschaltbilder von vier Ausführungsformen der Einrichtung zur optisch-elektronischen Steuerung der Brennschneidmaschine.

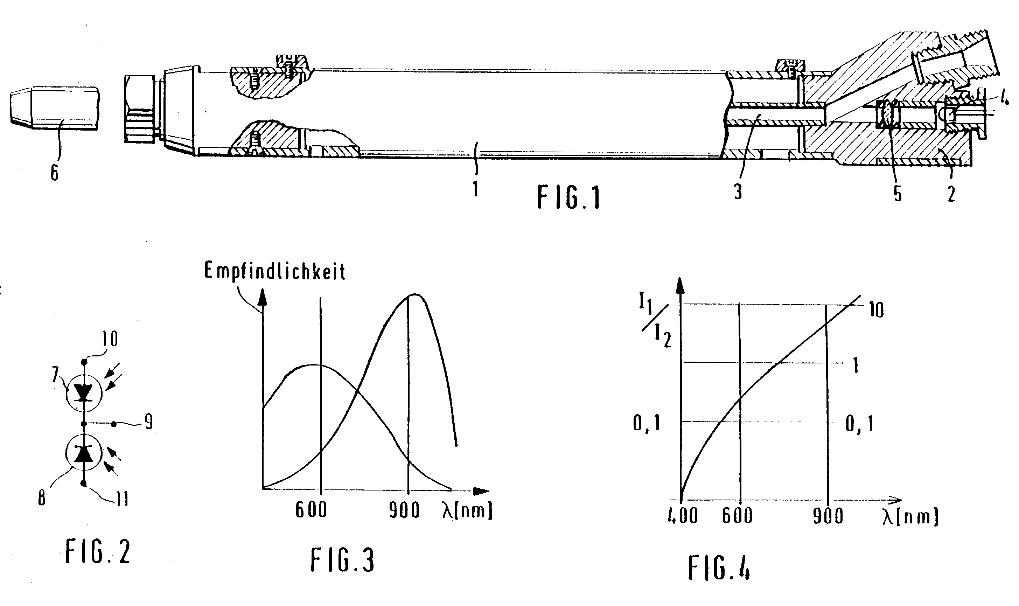

In Fig. 1 ist ein allgemein mit 1 bezeichneter Schneidbrenner dargestellt, dessen in Gebrauchslage oberer Anschlußteil oder Kopftel 2 in Längsrichtung geschnitten ist.

In Verlängerung eines Schneidsauerstoffkanals 3 ist in dem oberen Anschluß- oder Kopfteil 2 eine Opto-Doppeldiode 4 untergebracht, der eine abbildende Linse 5 vorgeschaltet ist. Die Linse 5 dient dazu, den Bereich, der vor bzw. unter einer nicht dargestellten Öffnung einer Düse 6 liegt, auf die Opto-Doppeldiode abzubilden. Der interessierende Bereich ist die beim Betrieb des Schneidbrenners aus der Düse 6 austretende Flamme bzw. das zu bearbeitende (schneidende) Teil des darunterliegenden nicht dargestellten Werkstücks.

In Fig. 2 ist dargestellt, daß die monolitische Opto-Doppeldiode aus einer ersten Diode 7 und einer zweiten Diode 8 besteht, die einen gemeinsamen Kathodenanschluß 9 (einer Kathode) aufweisen. Anodenanschlüsse sind mit 10 und 11 bezeichnet.

In Fig. 3 ist die relative spektrale Empfindlichkeit der ersten Diode mit dem Linienzug 12 und die relative spektrale Empfindlichkeit der zweiten Diode in Fig. 2 mit dem Linienzug 13 in Abhängigkeit von der Wellenlänge des Lichts, welche auf die beiden Dioden trifft, wiedergegeben. Es ist ersichtlich, daß die erste Diode - Linienzug 12 - ein Maximum nahe der Wellenlänge 600 nm aufweist, während der zweite Linienzug 13 - zweite Diode - ein Maximum nahe 900 nm hat.

Wenn das Verhältnis der Ausgangsgrößen der zweiten Diode 8 zu der ersten Diode 7 in Fig. 2 gebildet wird, nämlich das Verhältnis deren Kurzschlußströme, so verläuft die Abhängigkeit von der Lichtwellenlänge wie in Fig. 4 dargestellt. Es ist ersichtlich, daß das Verhältnis der Ausgangsströme bzw. Ausgangsgrößen der beiden Dioden in eindeutiger Beziehung zu der Lichtwellenlänge steht.

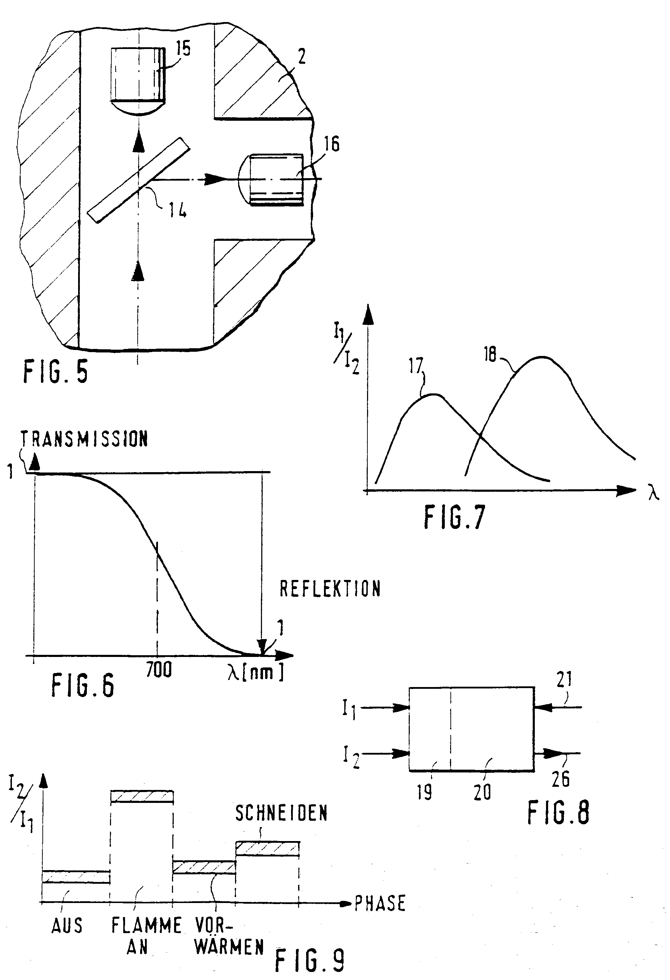

Statt der Opto-Doppeldiode 4 kann in dem Anschluß- oder Kopfteil 2 des Schneidbrenners eine Sensorenanordnung gemäß Fig. 5 bei allerdings größerem Platzbedarf untergebracht sein. Diese Sensorenanordnung besteht im wesentlichen aus einem teildurchlässigen Spiegel 14, in dessen Transmissionsstrahlengang sich eine erste Opto-Diode 15 befindet, während in dessen Reflexionsstrahlengang eine zweite Opto-Diode 16 angeordnet ist. Die Transmissions-Reflexionskennlinie des teildurchlässigen Spiegels ist in Fig. 6 angegeben. Die "50 %-Kante", bei der gleichviel Licht durch den Spiegel durchgelassen wird und reflektiert wird, liegt bei 700 nm. Bei längerwelligem Licht wird mehr relektiert, darunter wird mehr Licht durch den Spiegel durchgelassen.

Hieraus resultiert eine Abhängigkeit der Ausgangsgrößen bzw. Ausgangsströme der beiden Opto-Dioden 15 und 16 gemäß den Linienzügen 17 und 18 in Abhängigkeit von der Lichtwellenlänge wie in Fig. 7 dargestellt. Wenn aus beiden Ausgangsströmen i₁ und i₂ der Opto-Dioden 15 und 16 das Verhältnis gebildet wird, kann sich ein ähnlich definierter Kennlinienverlauf wie in Fig. 4 zu der Opto-Doppeldiode dargestellt einstellen.

Die Auswertung der Ausgangsgrößen der beiden Sensoren bzw. Opto-Dioden oder der Opto-Doppeldiode kann daher in grundsätzlich gleicher Weise mit der in Fig. 8 allgemein dargestellten Auswerteeinrichtung 20 erfolgen.

Unabhängig davon, ob die Ausgangsströme i₁ und i₂ der getrennten Opto-Dioden 15 und 16 ausgewertet werden sollen oder die Ausgangsströme der Opto-Doppeldiode 4, gelangen diese Ausgangsströme zunächst gemäß Fig. 8 in einen Quotientenbilder 19, in welchem das Verhältnis der beiden Ströme zumindest näherungsweise gebildet wird. Dieser Quotient ist entsprechend Fig. 4 ein Maß für die empfangene Lichtwellenlänge. Um aus diesem Quotienten eindeutige Steuer- oder Überwachungssignale zu bilden, wird in der Auswerteeinrichtung 20 unterschieden, um welche Phase, einschließlich Vorbereitungsphase des Schneidbrennens es sich bei der aktuellen Lichtwellenlängenmessung handelt. Hierzu werden Steuerkommandos, die zum Zünden der Vorwärmflamme, zum Ablauf des Vorwärmprozesses und zum Einleiten des Schneidens durch Zufuhr von Schneidsauerstoff in einer üblichen Steuerungseinrichtung einer Brennschneidmaschine erzeugt werden, der Auswerteeinrichtung über deren Steuereingang 21 zugeführt. Es kann dann in der Auswerteeinrichtung durch in Fig. 8 nicht dargestellte, jedoch weiter unten zu besprechende Diskriminatoren eine Auswahl des für die jeweilige Betriebsphase aktuellen Auswertebereichs getroffen werden. Damit wird eine eindeutige Aussage des Quotienten der Ströme i₁ und i₂ ermöglicht.

In Fig. 9 ist dieser Zusammenhang schaubildlich dargestellt. In der Ordinatenachse sind die verschiedenen Betriebszustände der Brennschneidmaschine bzw. des jeweiligen Schneidbrenners angegeben: Aus, Brennen der Flamme, Vorwärmen des Werkstücks, Schneiden unter Schneidsauerstoffzufuhr. Hierzu gehören Auswertebereiche 22, 23, 24, 25, in derem inneren schraffiertem Teil sich der Quotient i₂ zu i₁ in einem Sollbereich befindet und die ordnungsgemäße Funktion des Schneidbrenners in der jeweiligen Betriebsphase signalisiert. Ein Ausgang 26 der Auswerteeinrichtung gibt demgemäß Steuer- und Überwachungssignale ab, die angeben, ob die Vorwärmflamme tatsächlich brennt, ob die Zündtemperatur erreicht ist und ob der Schneidbrenner schneidet.

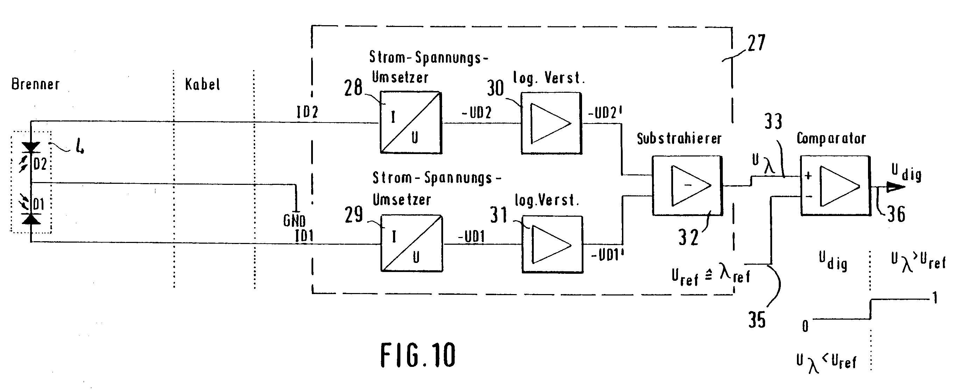

In der ersten Ausführungsform der elektronischen Mittel zur Quotientenbildung und der Auswerteeinrichtung nach Fig. 10 wird jeder der beiden Ströme ID1 bzw. ID2, welche den Strömen i₁ und i₂ in den vorangehenden Figuren entsprechen und die beispielsweise von der Opto-Doppeldiode 4 erzeugt werden, in einen Teil 27, der durch unterbrochene Linien begrenzt ist, der Schaltungsanordnung eingespeist. Jeder der beiden Ströme wird in einem Stromspannungsumsetzer 28 bzw. 29 in eine proportionale Spannung umgesetzt, die in je einem Zweig mit einem logischen Verstärker 30 bzw. 31 verstärkt wird. Die entsprechend den Kennlinien der logischen Verstärker verstärkten Spannungen werden in einem nachfolgenden Subtrahierer 32 voneinander subtrahiert. Die Ausgangsspannung des Subtrahierers ist somit angenähert der Quotient der Eingangsströme ID1 und ID2 und ist damit ein Maß für die von der Opto-Doppeldiode empfangenen Lichtwellenlänge. Der Teil 27 der Fig. 10 entspricht also wirkungsmäßig dem Quotientenbilder.

Die Ausgangsgröße des Quotientenbilders bzw. die Ausgangsspannung des Subtrahierers 32 wird in einen Eingang 33 eines Comparators 34 eingespeist, dessen zweiter Eingang 35 mit einer Referenzspannung beaufschlagt wird. Der Comparator unterscheidet, ob die der Lichtwellenlänge entsprechende Spannung an dem Eingang 33 um einen vorgegebenen Wert über oder unter der Referenzspannung liegt und bildet demgemäß ein Steuer- oder Überwachungssignal an seinem Ausgang 36. Die Auswerteeinrichtung besteht hier also nur aus einem Comparator zur Abgabe eines Steuer- oder Überwachungssignals.

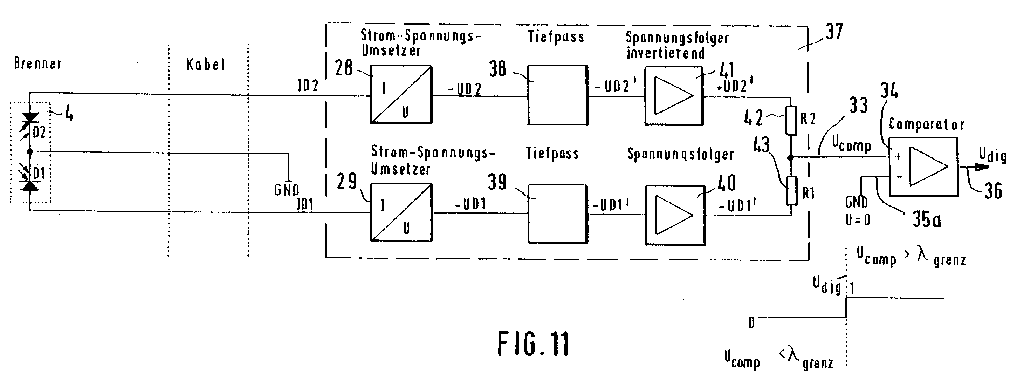

Die zweite Ausführungsform gemäß Fig. 11, in der gleiche Komponenten wie in Fig. 10 mit übereinstimmenden Bezugszeichen versehen sind, unterscheidet sich von der ersten Auführungsform nur durch Einzelheiten der Quotientenbildung in einem Teil 37. Auf die Stromspannungsumsetzer 28, 29 folgt hier jeweils ein glättender Tiefpaß 38 bzw. 39, dessen Ausgangsspannung in dem einen Zweig einen einfachen Spannungsfolger 40 durchläuft und in dem anderen Zweig einen invertierenden Spannungsfolger 40. Durch Zusammenschalten der Ausgänge der Spannungsfolger 40 und 41 über Widerstände 42 und 43 erfolgt dann eine Differenzbildung der Ausgangsspannungen der Spannungsfolger, die im Ergebnis eine angenäherte Quotientenbildung der Stromgrößen ID1 und ID2 der Opto-Doppeldiode 4 darstellt. Dieses den Quotienten repräsentierende Signal läuft in den Eingang 33 des Comparators 34 ein. Der zweite Eingang 35a des Comparators ist hier geerdet. Die Grenzwellenlänge, bei der der Comparator die Ausgangsgröße umschaltet, wird hier durch das Verhältnis der Widerstände 42 zu 43 bestimmt.

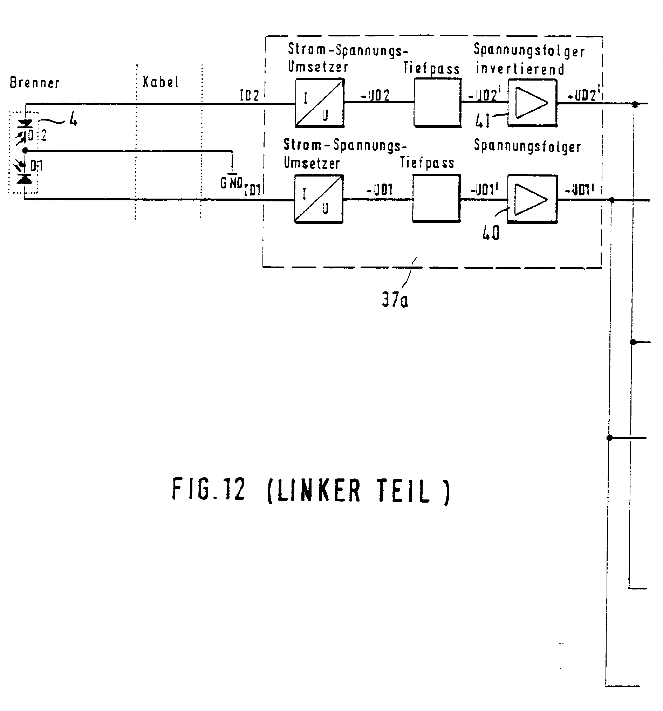

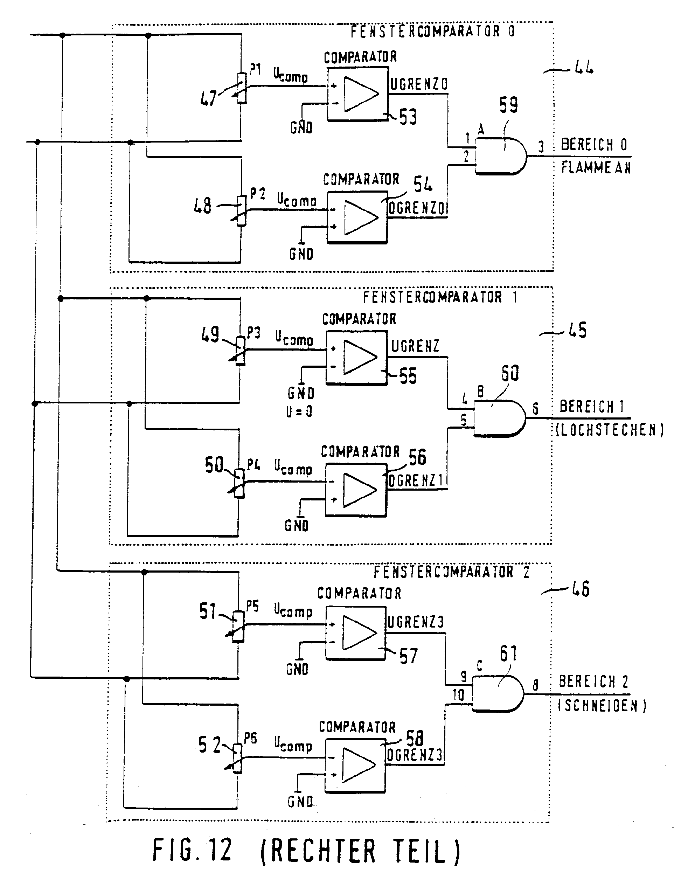

In der dritten Ausführungsform der Einrichtung nach Fig. 12 liegen Übereinstimmungen zu der zweiten Ausführungsform gemäß Fig. 11 im wesentlichen bis einschließlich des Teils 37a auf, welcher dem Teil 37 in Fig. 11 entspricht. Die Ausgänge der Spannungsfolger 40 und 41 sind in Fig. 12 jedoch nicht nur über je einen Widerstand miteinander verbunden, sondern über eine komplexere Widerstandsanordnung. Eine Zusammenschaltung zweier Widerstände, wie in Fig. 11 der Widerstände 42, 43, liegt in der dritten Ausführungsform in je einem der Potentiometer 47 - 52 vor, wobei ein Schleifer jedes der Potentiometer zu je einem Eingang eines der Comparatoren 53 - 58 geführt ist. Der jeweils andere Eingang jedes Comparators ist hier auf Nullpotential. An jedem Comparator kann somit, wie im Zusammenhang mit den Widerständen 42, 43 in Fig. 11 erläutert, eine Grenzwellenlänge eingestellt werden, bei der ein Signalwechsel des Ausgangssignals des jeweiligen Comparators eintritt. Jeweils zwei Comparatoren, z.B. 53, 54; 55, 56; 57, 58; sind zu einem Fenstercomparator 44 bzw. 45 bzw. 46 ausgangsseitig zusammengeschaltet. Die Ausgänge der beiden Comparatoren, die einen Fenstercomparator bilden, sind durch ein Logik-Element verknüpft, welches insbesondere als UND-Glied ausgebildet sein kann. Im einzelnen sind die Ausgänge der Comparatoren 43, 44 über das Logik-Element 59 verbunden, die Ausgänge der Comparatoren 55, 56 über das Logik-Element 60 und die Ausgänge der Comparatoren 57, 58 über das Logik-Element 61. Indem jeweils einer der Comparatoren , z.B. 53, eines Fenstercomparators der oberen Grenze eines Auswertebereichs zugeordnet ist, welche durch das Potentiometer 47 eingestellt wird, und ein Comparator 54 der unteren Grenze des Auswertebereichs, einstellbar durch das Potentiometer 48, bilden so beide Comparatoren 53, 54 in Verbindung mit dem Logik-Element 59 den Fenstercomparator 44, der ein Fenster mit einer oberen und einer unteren Grenze bildet, innerhalb deren ein Ausgangssignal des Logik-Elements einen ersten Wert annimmt und außerhalb deren Grenzen das Ausgangssignal sich auf einen zweiten Wert einstellt. In dieser Weise werden durch die Fenstercomparatoren 44, 45, 46 Ausgangssignale jeweils für den Zustand "Flamme an" bzw. "Lochstechen" bzw. "Schneiden" gebildet. Dabei entspricht jeder dieser Zustände oder Phasen einem Auswertebereich mit den durch die Potentiometer einstellbaren Grenzen.

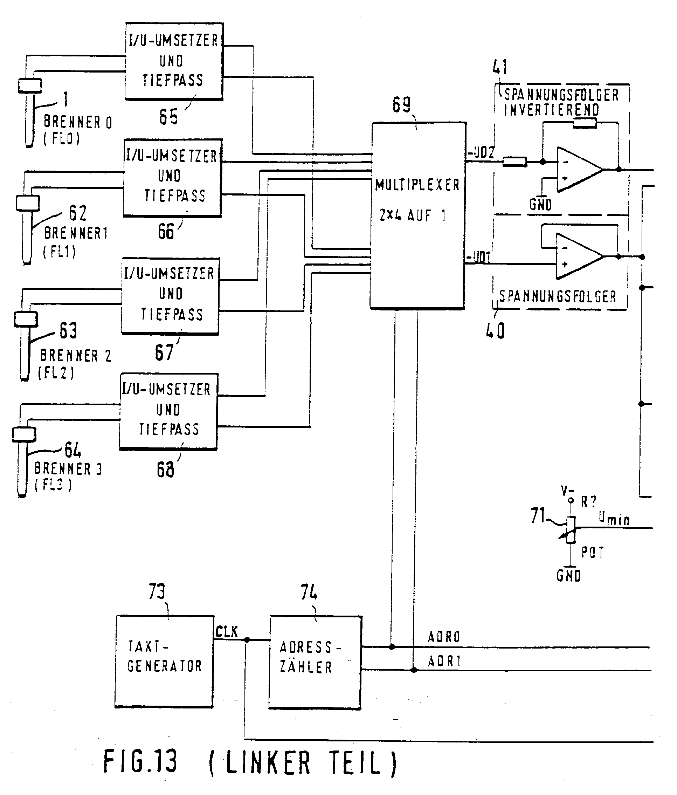

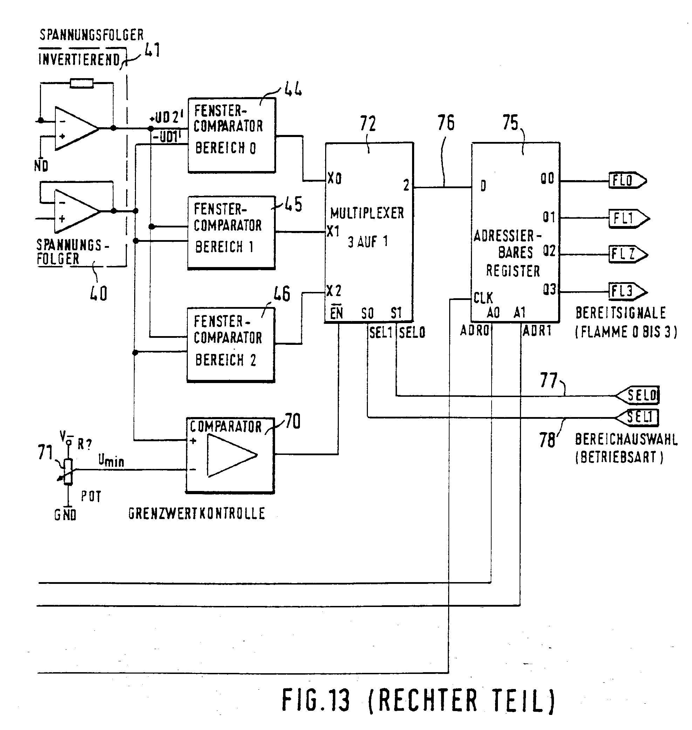

In der Ausführungsform gemäß Fig. 13 wird nicht nur ein Schneidbrenner 1 überwacht und gesteuert, sondern deren mehrere, einschließlich der Schneidbrenner 62, 63, 64. Jeder der Schneidbrenner ist dabei mit zwei Sensoren unterschiedlicher spektraler Empfindlichkeit, insbesondere einer Opto-Doppeldiode ausgestattet. Die Ausgangssigna!e der Opto-Doppeldioden, nämlich deren Ströme werden wiederum, wie insbesondere in Verbindung mit Fig. 11 beschrieben, in einem Stromspannungsumsetzer in proportionale Spannungen umgesetzt und in einem Tiefpaß geglättet. Die entsprechenden Einheiten des Stromspannungsumsetzers und des Tiefpasses sind in Fig. 13 mit 65 - 68 bezeichnet. Die Ausgangssignale dieser Einheiten 65 - 68 werden nicht parallel, sondern im Multiplexverfahren zeitlich gestaffelt weiterverarbeitet. Hierzu beaufschlagen jeweils die Ausgangsströme einer Opto-Doppeldiode bzw. zweier Dioden eines Paars über einen ersten Multiplexer 69 einen Spannungsfolger 40 sowie einen invertierenden Spannungsfolger 41, wie im Zusammenhang mit der zweiten Ausführungsform nach Fig. 11 in Bezug auf einen Schneidbrenner bzw. eine Sensorenanordnung beschrieben. Die Auswertung der Ausgangssignale der Spannungsfolger 40 und 41 ist dann in drei Fenstercomparatoren 44, 45, 46, wie im einzelnen in Verbindung mit der dritten Ausführungsform in Fig. 12 erläutert wurde. Zusätzlich erfolgt eine Grenzwertkontrolle mit einem Comparator 70, dessen einer Eingang mit der invertierten Spannung aus dem invertierenden Spannungsfolger 41 beaufschlagt wird und dessen zweiter, nicht bezeichneter Eingang über ein Potentiometer 71 auf eine minimale Spannung einstellbar ist, bei der eine Umschaltung erfolgt. Der eingestellte Widerstandswert des Potentiometers wird somit zur Grenzwertkontrolle hera gezogen. Die umzuschaltenden Ausgänge der Fenstercomparatoren 44, 45, 46 zur Abgabe von Überwachungs- und Steuersignalen des jeweils überwachten Schneidbrenners gemäß der Einstellung des ersten Multiplexers 69 werden in einen zweiten Multiplexer 72 eingespeist. Die Umschaltung der Multiplexer erfolgt synchron gesteuert durch einen Taktgenerator 73 und einen Adresszähler 74 sowie, was den zweiten Multiplexer 72 betrifft, über ein adressierbares Register 75. Hierzu steht das adressierbare Register mit dem zweiten Multiplexer 72 über eine Leitung 76 in Verbindung. Die weitere Steuerung des zweiten Multiplexers 72 wird in Abhängigkeit von einer Bereichsauswahl auf Leitungen 77 und 78 sowie von dem Ausgangssignal des Comparators 70 auf einer Leitung 79 durchgeführt. Die Aktivierung der Auswertebereiche geschieht hier also letztlich durch den zweiten Multiplexer 72. Die Zuordnung des ausgewählten Auswertebereichs zu einem der Schneidbrenner 1, 62 - 64 geht dann über das adressierbare Register 75. In dieser Weise können mehrere Schneidbrenner bzw. Schneidstellen mit verhältnismäßig geringem Aufwand zuverlässig überwacht und gesteuert werden.

## Patentansprüche

1. Einrichtung zur optisch-elektronischen Steuerung einer Brennschneidmaschine, mit fotoelektrischen Sensoren (4;7,8) unterschiedlicher spektraler Empfindlichkeit, die betriebsmäßig zumindest auf ein zu schneidendes Werkstück gerichtet sind und die ausgangsseitig mit einer Auswerteeinrichtung (20) in Verbindung stehen, um Steuersignale insbesondere für den Vorschub des Schneidbrenners (1) gegenüber dem Werkstück zu bilden,
**dadurch gekennzeichnet**,
daß wenigstens zwei der Sensoren (4;7,8) unterschiedlicher spektraler Empfindlichkeit auf denselben Bereich einer Flamme und des zu schneidenden Werkstücks gerichtet sind und daß elektronische Mittel (27) zur Quotientenbildung vorgesehen sind, die mit Ausgängen der beiden Sensoren (4;7,8) unterschiedlicher spektraler Empfindlichkeit derart in Verbindung stehen, daß der Quotient der Ausgangsgrößen der Sensoren (4;7,8) gebildet wird, und daß die Mittel zur Quotientenbildung ausgangsseitig mit der Auswerteeinrichtung (20) dergestalt in Verbindung steht, daß wenigstens ein Signal erzeugt wird, welches lediglich der Farbtemperatur des erfaßten Bereichs der Flamme und des zu schneidenden Werkstücks entspricht.

2. Einrichtung nach Anspruch 1,
**dadurch gekennzeichnet**,
daß die fotoelektrischen Sensoren (4;7,8) unterschiedlicher spektraler Empfindlichkeit in einem Schneidbrenner (1) der Brennschneidmaschine angeordnet sind.

3. Einrichtung nach Anspruch 1,
**dadurch gekennzeichnet**,
daß in der Auswerteeinrichtung Diskriminatoren (Fenstercomparatoren 53 - 58) für verschiedene Auswertebereiche des Quotienten der Ausgangsgrößen der Sensoren vorgesehen sind, von denen jeweils ein Auswertebereich in Abhängigkeit von dem Auftreten eines externen Steuerkommandos aktivierbar ist.

4. Einrichtung nach Anspruch 3,
**dadurch gekennzeichnet**,
daß Geber der externen Steuerkommandos zum Zünden der Flamme, zum Vorwärmen des Werkstücks und zum Schneiden mit der Auswerteeinrichtung (20) in Verbindung stehen und daß in der Auswerteeinrichtung Diskriminatoren zur einen Zündbereich, einen Vorwärmbereich und einen Schneidbereich des Quotienten der Ausgangsgrößen der Sensoren vorgesehen sind.

5. Einrichtung nach einem der Ansprüche 1 - 4,
**dadurch gekennzeichnet**,
daß die Sensoren unterschiedlicher spektraler Empfindlichkeit durch eine Opto-Doppeldiode (4) auf einem gemeinsamen Substrat gebildet sind, wobei die Dioden (7, 8) der Opto-Doppeldiode unterschiedliche Empfindlichkeitsmaxima in Abhängigkeit von der Lichtwellenlänge aufweisen.

6. Einrichtung nach einem der Ansprüche 1 - 4,
**dadurch gekennzeichnet**,
daß die Sensoren unterschiedlicher spektraler Empfindlichkeit aus zwei gleichartigen Opto-Dioden (15, 16) bestehen, von denen je eine Opto-Diode (16) in einem Reflexionsstrahlengang und eine Opto-Diode (15) im Transmissionsstrahlengang eines teildurchlässigen Spiegels (14) angeordnet ist, und daß der teildurchlässige Spiegel eine spektral unterschiedliche Reflexion und Transmission aufweist.

7. Einrichtung nach einem der Ansprüche 1 - 4,
**dadurch gekennzeichnet,**
daß die Sensoren unterschiedlicher spektraler Empfindlichkeit aus je einer getrennten Opto-Diode unterschiedlicher spektraler Charakteristik (Empfindlichkeit) bestehen.

8. Einrichtung nach Anspruch 7,
**gekennzeichnet durch**
je eine optische Germaniumdiode und Siliziumdiode als Sensoren unterschiedlicher spektraler Empfindlichkeit.

9. Einrichtung nach einem der vorangehenden Ansprüche,
**dadurch gekennzeichnet**,
daß die elektronischen Mittel zur Quotientenbildung durch wenigstens einen Subtrahierer (32) realisiert sind, in welchem der Quotient der Ausgangsgrößen der Sensoren unterschiedlicher spektraler Empfindlichkeit näherungsweise gebildet wird.

10. Einrichtung nach Anspruch 9,
**dadurch gekennzeichnet**,
daß jedem von zwei Eingängen des Subtrahierers (32) je ein Logik-Verstärker (30, 31) vorgeschaltet ist, der mit je einer der Ausgangsgrößen der Sensoren unterschiedlicher spektraler Empfindlichkeit beaufschlagt wird.

11. Einrichtung nach Anspruch 1,
**dadurch gekennzeichnet**,
daß in der Auswerteeinrichtung wenigstens ein Comparator (34) als Diskriminator vorgesehen ist, der je ein definiertes Ausgangssignal in Abhängigkeit davon abgibt, ob die Sensoren mit Licht über oder unter einer Grenzwellenlänge beaufschlagt werden.

12. Einrichtung nach den Ansprüchen 1, 3 und 11,
**dadurch gekennzeichnet**,
daß in der Auswerteeinrichtung als Diskriminator je ein Fenstercomparator (44; 45; 46) vorgesehen ist, der zwei Comparatoren (z.B. 53, 54) umfaßt, von denen je einer auf eine Obergrenze sowie auf eine Untergrenze des aktivierbaren Auswertebereichs voreinstellbar ist und deren Ausgänge über ein Logik-Element (59; 60; 61) zur Abgabe eines Überwachungssignals (Bereitsignals) bzw. Steuersignals miteinander verknüpft sind.

13. Einrichtung nach Anspruch 12,
**dadurch gekennzeichnet**,
daß zur Überwachung mehrerer Schneidbrenner (1, 52 - 64) in jedem Schneidbrenner je ein Paar fotoelektrischer Sensoren unterschiedlicher spektraler Empfindlichkeit angeordnet ist, daß die Paare fotoelektrischer Sensoren über einen ersten Multiplexer (89) mit Eingängen der Fenstercomparatoren (44, 45, 46) verschiedener Auswertebereiche in Verbindung stehen, daß die Fensterkomparatoren ausgangsseitig mit einem zweiten Multiplexer (72) verbunden sind, der Steuereingänge zur Aktivierung der verschiedenen Auswertebereiche in Abhängigkeit von den externen Steuersignalen aufweist und dessen Ausgang an ein adressierbares Register (75) angeschlossen ist, der Steuerund Überwachungssignale für die verschiedenen Schneidbrenner abgibt, und daß die Multiplexer (69, 72) sowie das adressierbare Register (75) miteinander synchronisiert sind.

14. Einrichtung nach einem der vorangehenden Ansprüche,
**dadurch gekennzeichnet**,
daß ein Empfindlichkeitsmaximum eines der beiden Sensoren um 900 nm liegt und sich ein Empfindlichkeitsmaximum des anderen der beiden Sensoren um 600 nm befindet.

## Claims

1. System for the opto-electric command of a flame-cutting machine with photoelectric sensors (4, 7, 8) of varying spectral sensitivity which are directed operationally at a workpiece to be cut and which on the output side are connected to an evaluation unit (20) in order to form control signals particularly for the feed of the flame cutter (1) in relation to the workpiece, characterized in that at least two of the sensors (4, 7, 8) of varying spectral sensitivity are directed to the same area of a flame and of the workpiece to be cut and in that electronic means (27) are provided for determinging the proportion which are connected to outlets of the two sensors (4, 7, 8) of varying spectral sensitivity in such a way that the proportion of the output values of the sensors (4, 7, 8) is determined and in that the means for determining the proportion on the output side are connected to the evaluation unit (20) in such a way that at least one signal is generated which simply corresponds to the colour temperature of the detected area of the flame and of the workpiece to be cut.

2. System according to claim 1, characterized in that the photoelectric sensors (4, 7, 8) of varying spectral sensitivity are disposed in a flame cutter (1) of the flame-cutting machine.

3. System according to claim 1, characterized in that discriminators (window comparators 53-58) for varying evaluation ranges of the proportion of the output values of the sensors are provided in the evaluation unit, of which in each case an evaluation range can be activated in accordance with the generation of an external control command.

4. System according to claim 3, characterized in that transmitters are connected to the evaluation unit (20) for igniting the flame, for preheating the workpiece and for cutting and in that discriminators for an ignition range, a preheating range and a cutting range of the proportion of the outputs of the sensors are provided in the evaluation unit.

5. System according to one of claims 1 to 4, characterized in that the sensors of varying spectral sensitivity are formed by a opto-double diode (4) on a common substrate so that the diodes (7, 8) of the opto-double diode have varying maximum sensitivity values in accordance with the light wavelength.

6. System according to one of claims 1 to 4, characterized in that the sensors of varying spectral sensitivity consist of two similar opto-diodes (15, 16), of which one opto-diode (16) each is disposed in a reflection ray path and one opto-diode (15) is disposed in the transmission ray path of a semireflecting mirror (14) and in that the semireflecting mirror has a different reflection and transmission from a spectral point of view.

7. System according to one of claims 1 to 4, characterized in that the sensors of varying spectral sensitivity consist in each case of a separate opto-diode of varying spectral characteristic (sensitivity).

8. System according to claim 7, characterized by one optical germanium diode and silicon diode each as sensors of varying spectral sensitivity.

9. System according to one of the preceding claims, characterized in that the electronic means for determining a proportion are provided through at least one subtracter (32), in which the proportion of the output values of the sensors of varying spectral sensitivity is determined by approximation.

10. System according to claim 9, characterized in that one logic amplifier (30, 31) is, in each case, connected in series to each of two inputs of the subtracter (32) so that the logic amplifiers are activated with, in each case, one of the output values of the sensors of varying spectral sensitivity.

11. System according to claim 1, characterized in that at least one comparator (34) is provided as a discriminator in the evaluation unit with the comparator giving off, in each case, a defined output signal according to whether the sensors are activated with light above or below a boundary wavelength.

12. System according to claims 1, 3 and 11, characterized in that a window comparator (44, 45, 46) is provided, in each case, as a discriminator in the evaluation unit which comprises two comparators (e.g. 53, 54), of which, in each case, one can be preset to an upper limit and to a lower limit of the evaluation range which can be activated and the output values of which can be connected to each other via a logic element (59, 60, 61) for giving off a monitoring signal (ready signal) or control signal.

13. System according to claim 12, characterized in that a pair of photoelectric sensors of varying spectral sensitivity are disposed in each flame cutter for monitoring several flame cutters (1, 62-64), that the pairs of photoelectric sensors are connected via a first multiplexer (89) to inputs of the window comparators (44, 45, 46) of different evaluation ranges, that the window comparators are connected on the output side to a second multiplexer (72) which is provided with control inputs for activating the various evaluation ranges in accordance with the external control signals and the output of which is connected to an addressable register (75) which gives off control and monitoring signals for the various flame cutters and in that the multiplexer (69, 72) and the addressable register (75) are synchronized with each other.

14. System according to one of the preceding claims, characterized in that a maximum sensitivity value of one of the two sensors is about 900 nm and that a maximum sensitivity value of the other of the two sensors is about 600 nm.

## Revendications

1. Dispositif pour la commande opto-électronique d'une machine à découper au chalumeau, avec des détecteurs photoélectriques (4 ; 7, 8) de sensibilité spectrale différente qui sont dirigés, pour l'utilisation, au moins sur une pièce à découper et qui sont reliés, du côté de la sortie, à un dispositif d'évaluation (20), pour former des signaux de commande, en particulier pour l'avancement du chalumeau (1) par rapport à la pièce à travailler,
**caractérisé en ce**
qu'au moins deux des détecteurs (4 ; 7, 8) de sensibilité spectrale différente sont dirigés sur la même zone d'une flamme et de la pièce à découper et que des moyens électroniques (27) pour la formation de quotient sont prévus, moyens qui sont reliés aux sorties des deux détecteurs (4 ; 7, 8) de sensibilité spectrale différente de telle manière que le quotient des grandeurs de sortie des détecteurs (4 ; 7, 8) est formé, et que les moyens pour la formation de quotient sont reliés, du côté de la sortie, au dispositif d'évaluation (20), de telle manière qu'au moins un signal est engendré qui correspond uniquement à la température de couleur de la zone détectée de la flamme et de la pièce à découper.

2. Dispositif selon la revendication 1,
**caractérisé en ce**
que les détecteurs photoélectriques (4 ; 7, 8) de sensibilité spectrale différente sont agencés dans un chalumeau (1) de la machine à découper au chalumeau.

3. Dispositif selon la revendication 1,
**caractérisé en ce**
que des discriminateurs (comparateurs de fenêtres 53-58) sont prévus dans le dispositif d'évaluation pour différentes plages d'évaluation du quotient des grandeurs de sortie des détecteurs parmi lesquelles respectivement une zone d'évaluation peut être activée en fonction de l'apparition d'un ordre de commande externe.

4. Dispositif selon la revendication 3,
**caractérisé en ce**
que des émetteurs des ordres de commande externes pour allumer la flamme, pour préchauffer la pièce à travailler et pour découper sont reliés au dispositif d'évaluation (20) et que des discriminateurs sont prévus dans le dispositif d'évaluation pour une plage d'allumage, une plage de préchauffage et une plage de découpage du quotient des grandeurs de sortie des détecteurs.

5. Dispositif selon l'une des revendications 1 à 4,
**caractérisé en ce**
que les détecteurs de sensibilité spectrale différente sont formés par une diode double opto-électronique (4) sur un substrat commun, les diodes (7, 8) de la diode double opto-électronique présentant des maxima de sensibilité différents en fonction de la longueur d'onde de la lumière.

6. Dispositif selon l'une des revendications 1 à 4,
**caractérisé en ce**
que les détecteurs de sensibilité spectrale différente sont constitués par deux diodes opto-électroniques (15, 16) de même type, dont l'une (16) est respectivement agencée dans la marche des rayons réfléchis et l'autre (15) dans la marche des rayons transmis d'un miroir (14) à argenture partiellement transparent et que le miroir à argenture partiellement transparent présente une réflexion spectralement différente de sa transmission.

7. Dispositif selon l'une des revendications 1 à 4,
**caractérisé en ce**
que les détecteurs de sensibilité spectrale différente sont constitués chacun par une diode opto-électronique séparée de caractéristique (sensibilité) spectrale différente.

8. Dispositif selon la revendication 7,
**caractérisé**
par respectivement une diode optique au germanium et une diode optique au silicium comme capteurs de sensibilité spectrale différente.

9. Dispositif selon l'une des revendications précédentes,
**caractérisé en ce**
que les moyens électroniques pour la formation de quotient sont réalisés par au moins un soustracteur (32) dans lequel le quotient des grandeurs de sortie des détecteurs de sensibilité spectrale différente est formé approximativement.

10. Dispositif selon la revendication 9,
**caractérisé en ce**
qu'un amplificateur de logique (30, 31) précède chacune des deux entrées du soustracteur (32), amplificateur qui est sollicité par respectivement l'une des grandeurs de sortie des détecteurs de sensibilité spectrale différente.

11. Dispositif selon la revendication 1,
**caractérisé en ce**
qu'au moins un comparateur (34) est prévu comme discriminateur dans le dispositif d'exploitation, comparateur qui émet respectivement un signal de sortie défini en fonction du fait que les capteurs sont sollicités par de la lumière au-dessus ou au-dessous d'une longueur d'onde limite.

12. Dispositif selon les revendications 1, 3 et 11,
**caractérisé en ce**
qu'un comparateur de fenêtres (44 ; 45 ; 46) est prévu respectivement comme discriminateur dans le dispositif d'évaluation, comparateur qui comprend deux comparateurs (par exemple 53, 54), dont l'un peut être préréglé sur une limite supérieure ainsi que sur une limite inférieure de la plage d'évaluation activable et dont les sorties sont enchaînées l'une à l'autre par un élément logique (59 ; 50 ; 51) pour émettre un signal de contrôle (signal de réponse) ou de commande.

13. Dispositif selon la revendication 12,
**caractérisé en ce**
qu'une paire de détecteurs photoélectriques de sensibilité spectrale différente est respectivement placée dans chaque chalumeau pour contrôler plusieurs chalumeaux (1, 62 - 64), que les paires de détecteurs photoélectriques sont reliées, par l'intermédiaire d'un premier multiplexeur (89), aux entrées des comparateurs de fenêtre (44, 45, 46) de différentes plages d'évaluation, que les comparateurs de fenêtres sont reliés, du côté de la sortie, à un second multiplexeur (72) qui présente des entrées de commande pour activer les différentes plages d'évaluation en fonction des signaux de commande externes et dont la sortie est raccordée à un registre (75) adressable, qui émet des signaux de commande et de contrôle pour les différents chalumeaux et que les multiplexeurs (69, 72) ainsi que le registre (75) adressable sont synchronisés l'un avec l'autre.

14. Dispositif selon l'une des revendications précédentes,
**caractérisé en ce**
qu'un maximum de sensibilité d'un des deux détecteurs se situe autour de 900 nm et qu'un maximum de sensibilité de l'autre des deux détecteurs se trouve autour de 600 nm.
